# EUROPÄISCHE PATENTSCHRIFT

(11) **EP 3 031 576 B1**
(45) Veröffentlichungstag und Bekanntmachung des Hinweises auf die Patenterteilung: **06.03.2019**
(21) Anmeldenummer: 15187348.6
(22) Anmeldetag: 29.09.2015
(51) Int. Cl.: B23Q 39/02, B23Q 39/00

(54) **WERKZEUGMASCHINE**
MACHINE TOOL
MACHINE-OUTIL

(30) Priorität: 08.12.2014 DE 202014105912 U
(43) Veröffentlichungstag der Anmeldung: 15.06.2016
(73) Patentinhaber: ELHA-Maschinenbau Liemke KG, 33161 Hövelhof (DE)
(72) Erfinder: KLOESENER, Manfred, 33129 Delbrück (DE)
(74) Vertreter: Dantz, Jan Henning

(56) Entgegenhaltungen:
- EP-A1- 2 310 166
- EP-A2- 1 291 101
- WO-A1-97/10071
- DE-A1- 19 528 404
- DE-A1-102004 050 199
- DE-A1-102011 053 729
- US-A- 5 439 431

## Beschreibung

Die Erfindung betrifft eine Werkzeugmaschine gemäß dem Oberbegriff des Anspruchs 1.

Eine solche spanende Werkzeugmaschine weist eine Vielzahl fest stehender, d.h. nicht translatorisch bewegbarer Werkzeuge auf, beispielsweise Bohrer oder Fräser, die mittels Werkzeugspindeln lediglich rotieren. Dabei sind jeweils mehrere Werkzeugspindeln an einem Spindelkopf zu einer Gruppe zusammengefasst, der starr positioniert ist und ebenso wie der Werkstückträger im Sinne eines Kragarmes vorsteht, so dass die Werkzeuge senkrecht zur Längsachse des Werkstückträgers angeordnet sind.

Charakteristisch für eine solche Werkzeugmaschine ist, dass das zu bearbeitende Werkstück über eine Werkstückaufnahme am Werkstückträger befestigt ist, mittels dessen translatorischer und gegebenenfalls rotatorischer Bewegung zu den demgegenüber fest stehenden Werkzeugen verfahren wird. Hierzu wird auf die EP 1 642 673 A1 verwiesen, in der eine Werkzeugmaschine gemäß der Gattung offenbart ist.

Prinzipiell hat sich die bekannte Werkzeugmaschine in ihrer Funktion bewährt. Forderungen gehen jedoch dahin, einen Werkzeugwechsel zu ermöglichen, um so zum einen bei einem automatischen Werkzeugwechsel konzeptbedingte Wechselfehler zu vermeiden und Nebenzeiten, wie sie sich beim bislang üblichen Werkzeugwechsel ergeben, zumindest zu reduzieren.

In der EP 2 310 166 B1 wird hierzu eine Lösung vorgeschlagen, durch die zwar ein Werkzeugwechsel möglich ist, die jedoch im Übrigen den gestellten Forderungen, beispielsweise auch nach einer parallelen Bearbeitung mehrerer Werkstücke, nicht gerecht wird.

DE 10 2004 050 199 A1 offenbart auch eine gattungsgemäße Werkzeugmaschine, wobei die Werkzeugspindeln an Revolverköpfen angeordnet sind.

Auch einer höheren Flexibilität bei der Bearbeitung der Werkstücke, die durch eine Erhöhung der Anzahl der Werkzeugspindeln erreichbar wäre, sind bei den bekannten Werkzeugmaschinen sehr enge Grenzen gesetzt, zumindest ohne Veränderung der Maschinenarchitektur.

Bei einer Vergrößerung des Bauraumes, um eine größere Anzahl von Werkzeugspindeln unterbringen zu können, ergibt sich jedoch eine Verlängerung der Verfahrwege des Werkzeugträgers und damit eine Verlängerung der Nebenzeiten, was unter wirtschaftlichen Gesichtspunkten inakzeptabel ist.

In der US 5 439 431 A, der WO 97/10071 A1 sowie der EP 1 291 101 A2 ist jeweils eine Werkzeugmaschine offenbart, die abweichend von der Gattung einen vertikal ausgerichteten Werkstückträger aufweist, während die Schwenkachse des Revolverkopfes quer dazu verläuft.

Der Erfindung liegt die Aufgabe zugrunde, eine Werkzeugmaschine der gattungsgemäßen Art so weiterzuentwickeln, dass ihre Verwendungsfähigkeit verbessert wird, insbesondere eine rationellere Bearbeitung der Werkstücke möglich ist.

Diese Aufgabe wird durch eine Werkzeugmaschine mit den Merkmalen des Anspruchs 1 gelöst.

Durch die Erfindung ist nun eine Werkzeugmaschine geschaffen, die gegenüber einer nach dem Stand der Technik erhebliche Vorteile aufweist. Hierzu sei zunächst einmal erwähnt, dass ein automatischer Werkzeugwechsel möglich ist, da die dem zu bearbeitenden Werkstück abgewandten, nicht im Einsatz befindlichen Werkzeuge frei zugänglich sind.

Zum einen werden dadurch konzeptbedingte Wechselfehler verhindert, ebenso wie Nebenzeiten bis auf eine vernachlässigbare Größe reduziert.

Aber auch ein manueller Werkzeugwechsel gestaltet sich deutlich unproblematischer als dies bislang der Fall ist.

Da der Revolverkopf, der ebenso wie der Werkstückträger im Sinne eines Kragarmes vorsteht, um seine Längsachse drehbar ist, können die Werkzeuge in einen Bereich außerhalb des Zerspanungsraumes geschwenkt werden, so dass zum manuellen Werkzeugwechsel die Bedienperson nicht mehr in den Arbeitsraum eintreten muss, wie bisher, was immer mit einer Verletzungsgefahr durch die dort angeordneten Werkzeuge verbunden ist.

Unabhängig davon lässt sich die Anzahl der einsetzbaren Werkzeuge erheblich vergrößern, je nach Ausbildung des Revolverkopfes auf mehr als das Vierfache, bei unveränderter Maschinenarchitektur.

Darüber hinaus ist eine parallele, d.h. zeitgleiche Bearbeitung mehrerer Werkstücke möglich, was naturgemäß eine deutlich rationellere Fertigung mit den sich daraus ergebenden Kostenersparnissen mit sich bringt. Hierzu trägt auch
bei, dass eine Reihe von Werkzeugen nebeneinander, d.h. in Längsrichtung des Revolverkopfes angeordnet sein kann, so dass die Produktivität der Maschine erhöht wird.

Bei einem Einsatz von beispielsweise vier Revolverköpfen mit jeweils, ebenfalls beispielsweise acht Werkzeugspindel-Reihen ist z.B. eine Bearbeitung unter einem Winkel von 45°, also in diagonaler Richtung möglich, wodurch der Verfahrweg des Werkstückträgers äußerst kurz gehalten wird.

Wie erwähnt, steht jeder Revolverkopf im Sinne eines Kragarmes vor.

Im Übrigen ist jeder Werkzeugebene der Revolverköpfe ein separater, insbesondere im Innern des Revolverkopfes angeordneter Antrieb zugeordnet, mit dem die Werkzeugspindeln, vorzugsweise jeweils nur die im Einsatz befindlichen, angetrieben werden. Die Verschwenkung des Revolverkopfes um seine Längsachse erfolgt über einen Antrieb, der in der Werkzeugmaschine positioniert sein kann.

Zu erwähnen ist noch, dass sich die neue Werkzeugmaschine mit relativ geringem konstruktivem und fertigungstechnischem Aufwand realisieren lässt, zumal Revolverköpfe, insbesondere sogenannte Spindel-Reihenrevolver an sich bekannt sind und für diverse Anwendungsfälle konfektioniert erhältlich sind.

Weitere vorteilhafte Ausbildungen der Erfindung sind in den Unteransprüchen gekennzeichnet.

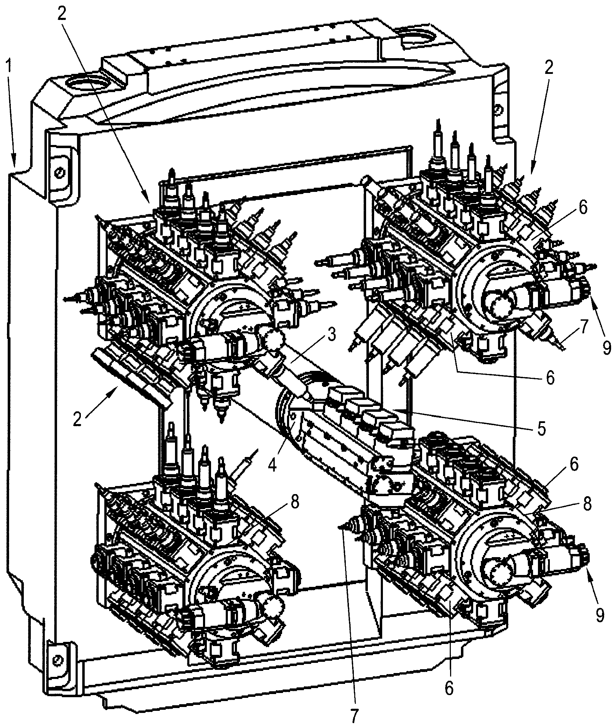

Ein Ausführungsbeispiel der Erfindung wird nachfolgend anhand der beigefügten Zeichnung beschrieben.

Die einzige Figur zeigt einen Teil einer Werkzeugmaschine in einer perspektivischen Vorderansicht.

In der Figur ist eine Vorderseite eines Maschinengestells 1 einer nicht weiter abgebildeten Werkzeugmaschine dargestellt, mit in Gruppen über- und nebeneinander angeordneten Werkzeugspindeln 6 zur Aufnahme von antreibbaren Werkzeugen 7, wie Bohrer, Fräser oder dergleichen.

Weiter weist die Werkzeugmaschine einen mehrachsig translatorisch bewegbaren, im Sinne eines Kragarmes vorstehenden Werkstückträger 3 auf, der im Beispiel als Pinole ausgebildet ist und der neben den translatorischen Bewegungen in X-, Y- und Z-Richtung bzw. aus deren Kombination, also einer diagonalen Bewegung, auch drehbar ist.

An seinem freien Ende, sprich an seiner Stirnseite ist an dem Werkstückträger 3 eine Werkstückaufnahme 4 gehalten, an der ein zu bearbeitendes Werkstück 5 befestigt ist.

Gemäß der Erfindung ist jede Gruppe von Werkzeugspindeln 6 an einem axial fest am Maschinengestell 1 gehaltenen Revolverkopf 2 angeordnet, wobei im Beispiel vier Revolverköpfe 2 vorgesehen sind, die ebenso wie der Werkstückträger 3 im Sinne eines Kragarmes gegenüber dem Maschinengestell 1 vorstehen. Dabei sind die Revolverköpfe 2 über- und nebeneinander angeordnet und verschwenkbar am Maschinengestell 1 gehalten, wozu stirnseitig jeweils ein Antrieb 9 vorgesehen ist.

Im Beispiel ist jeder Revolverkopf 2 im Querschnitt achteckig gestaltet, mit acht Anschlussflächen 8, an denen in Längsachsrichtung des Revolverkopfes 2 hintereinander liegend im Beispiel jeweils vier Werkzeugspindeln 6 angeschlossen sind, in denen, wie erwähnt, die in Funktion drehend angetriebenen Werkzeuge 7 angeschlossen sind.

Die Verdrehung der Revolverköpfe 2, um jeweils eine andere Reihe von Werkzeugen 7 in Eingriff zu bringen, erfolgt bei dem gezeigten Beispiel in 45°-Schritten um die Längsachse des Revolverkopfes 2, wobei ein Antrieb 9 dazu an der Stirnseite des Revolverkopfes 2 und die Antriebe für die Werkzeugspindeln 6 im Inneren der Werkzeugmaschine, dem jeweiligen Revolverkopf 2 benachbart, angeordnet sind.

## Patentansprüche

1. Werkzeugmaschine, mit mehreren über- und/oder nebeneinander angeordneten Gruppen von jeweils ein Werkzeug (7) aufnehmenden Werkzeugspindeln (6) sowie einem mehrachsig translatorisch zu den Werkzeugspindeln (6) hin bewegbaren, im Sinne eines Kragarmes vorstehenden Werkstückträger (3), an dem mindestens eine Werkstückaufnahme (4) befestigt ist, **dadurch gekennzeichnet, dass** jede Gruppe von Werkzeugspindeln (6) in einem axial fest stehenden, um seine Längsachse verdrehbaren, parallel zum Werkstückträger (3) als Kragarm vorstehenden Revolverkopf (2) angeordnet ist, an dem mehrere, in Reihe über den Umfang verteilte Werkzeugspindeln (6) angeordnet sind, wobei jeder Reihe umfänglicher Werkzeugspindeln (6) ein im Innern des Revolverkopfes (2) angeordneter Antrieb zugeordnet ist, der mit jeweils einer der Werkzeugspindeln (6) in Wirkverbindung bringbar ist.

2. Werkzeugmaschine nach Anspruch 1, **dadurch gekennzeichnet, dass** jeder Revolverkopf (2) in Längsachsrichtung hintereinander in einer Reihe liegend Werkzeugspindeln (6) aufweist.

3. Werkzeugmaschine nach Anspruch 1 oder 2, **dadurch gekennzeichnet, dass** der Revolverkopf (2) in Schritten von 45° verdrehbar ist.

4. Werkzeugmaschine nach einem der vorhergehenden Ansprüche, **dadurch gekennzeichnet, dass** jeder Revolverkopf (2) Auflageflächen (8) aufweist, an denen die Werkzeugspindeln (6) gehalten sind.

5. Werkzeugmaschine nach einem der vorhergehenden Ansprüche, **dadurch gekennzeichnet, dass** mindestens zwei Revolverköpfe (2) vorgesehen sind.

6. Werkzeugmaschine nach einem der vorhergehenden Ansprüche, **dadurch gekennzeichnet, dass** jeder Revolverkopf (2) mit einem im Innern der Werkzeugmaschine angeordneten Antrieb antreibbar ist.

7. Werkzeugmaschine nach einem der vorhergehenden Ansprüche, **dadurch gekennzeichnet, dass** jeder Revolverkopf (2) durch einen an seiner freien Stirnseite angeordneten Antrieb (9) um seine Längsachse verschwenkbar ist.

8. Werkzeugmaschine nach einem der vorhergehenden Ansprüche, **dadurch gekennzeichnet, dass** auf jeder Auflagefläche (8) mindestens zwei Werkzeugspindeln (6) angeordnet sind.

## Claims

1. Machine tool, having a plurality of groups of tool spindles (6) which are arranged above and/or next to one another and each receive a tool (7), and having a workpiece carrier (3) which can be moved translationally in several axes in relation to the tool spindles (6), which protrudes in the sense of a cantilever arm, and to which at least one workpiece receiver (4) is fastened, **characterized in that** each group of tool spindles (6) is arranged a turret head (2) which is axially fixed, can be rotated about its longitudinal axis, projects parallel to the workpiece carrier (3) as a cantilever arm and on which a plurality of tool spindles (6) distributed in series over the circumference are arranged, wherein each row of circumferential tool spindles (6) is assigned a drive which is arranged inside the turret head (2) and can be brought in each case into operative connection with one of the tool spindles (6).

2. Machine tool according to claim 1, **characterized in that** each turret head (2) has tool spindles (6) lying one behind the other in a row in the longitudinal axial direction.

3. Machine tool according to claim 1 or 2, **characterized in that** the turret head (2) is rotatable in steps of 45°.

4. Machine tool according to one of the preceding claims, **characterized in that** each turret head (2) has bearing surfaces (8) on which the tool spindles (6) are held.

5. Machine tool according to one of the preceding claims, **characterized in that** at least two turret heads (2) are provided.

6. Machine tool according to one of the preceding claims, **characterized in that** each turret head (2) can be driven by a drive arranged inside the machine tool.

7. Machine tool according to one of the preceding claims, **characterized in that** each turret head (2) is pivotable about its longitudinal axis by a drive (9) arranged on its free end face.

8. Machine tool according to one of the preceding claims, **characterized in that** at least two tool spindles (6) are arranged on each bearing surface (8).

## Revendications

1. Machine-outil avec plusieurs groupes de broches porte-outil (6) disposées les unes au-dessus et/ou à côté des autres et recevant chacune un outil (7) et avec un porte-pièce (6) capable de translation sur plusieurs axes par rapport aux broches porte-outil (6) à la manière d'un bras en porte-à-faux, sur lequel est fixé au moins un réceptacle de pièce (4), **caractérisée en ce que** chaque groupe de broches porte-outil (6) est disposé dans une tourelle revolver (2) fixe dans le sens axial, capable de rotation sur son axe longitudinal et qui dépasse comme un bras en porte-à-faux par rapport au porte-pièce (3), sur laquelle sont disposées plusieurs broches porte-outil (6) disposées en rang sur la circonférence, chaque rang de broches porte-outil (6) disposées sur la circonférence étant associé à un entraînement qui est disposé à l'intérieur de la tourelle revolver (2) et qui peut être amené en liaison active avec l'une des broches porte-outil (6).

2. Machine-outil selon la revendication 1, **caractérisée en ce que** chaque tourelle revolver (2) présente des broches porte-outil (6) alignées les unes derrière les autres dans le sens de l'axe longitudinal.

3. Machine-outil selon la revendication 1 ou 2, **caractérisée en ce que** la tourelle revolver (2) peut tourner par pas de 45°.

4. Machine-outil selon l'une des revendications précédentes, **caractérisée en ce que** chaque tourelle revolver (2) présente des surfaces d'appui (8) sur lesquelles les broches porte-outil (6) sont retenues.

5. Machine-outil selon l'une des revendications précédentes, **caractérisée en ce qu'**au moins deux tourelles revolver (2) sont prévues.

6. Machine-outil selon l'une des revendications précédentes, **caractérisée en ce que** chaque tourelle revolver (2) peut être entraînée avec un entraînement disposé à l'intérieur de la machine-outil.

7. Machine-outil selon l'une des revendications précédentes, **caractérisée en ce que** chaque tourelle revolver (2) peut être basculée autour de son axe longitudinal par un entraînement (9) disposé sur sa face d'extrémité libre.

8. Machine-outil selon l'une des revendications précédentes, **caractérisée en ce qu'**au moins deux broches porte-outil (6) sont disposées sur chaque surface d'appui (8).
